# EUROPEAN PATENT APPLICATION

(11) **EP 4 557 443 A1**
(43) Date of publication of application: **21.05.2025**
(21) Application number: 23904078.5
(22) Date of filing: 15.12.2023
(51) Int. Cl.: H01M 10/0587, H01M 50/121, H01M 50/131, H01M 4/58

(54) **CYLINDRICAL LITHIUM-SULFUR BATTERY AND PREPARATION METHOD THEREFOR**

(30) Priority: 16.12.2022 KR 20220177194
(71) Applicant: LG Energy Solution, Ltd., Seoul 07335 (KR)
(72) Inventor: LEE, Jong-Yoon, Daejeon 34122 (KR); KIM, Hyeon-Jin, Daejeon 34122 (KR); NOH, Jae-Kyo, Daejeon 34122 (KR); HAN, Sueng-Hoon, Daejeon 34122 (KR); HONG, Kyung-Sik, Daejeon 34122 (KR); HONG, Suk-Hyun, Daejeon 34122 (KR)
(74) Representative: Goddar, Heinz J.
(86) International application number: PCT/KR2023/020829
(87) International publication number: WO 2024/128879

(57) **Abstract**

A lithium-sulfur battery according to the present disclosure includes a j elly-roll type electrode assembly coated with a polymer film having a heat shrink property, and the electrode assembly is subjected to pressure in an inward direction by the shrinkage of the polymer film in an activation process. Accordingly, the battery operates under appropriate pressure applied to the electrode assembly, thereby achieving maximum electrochemical performance.

## Description

### TECHNICAL FIELD

The present disclosure relates to a lithium-sulfur battery suitable for a cylindrical lithium-sulfur battery and a method for manufacturing the same.

The present application claims priority to Korean Patent Application No. 10-2022-0177194 filed on December 16, 2022 in the Republic of Korea, the disclosure of which is incorporated herein by reference.

### BACKGROUND ART

As secondary batteries are used in a wide range of applications including electric vehicles (EVs) and energy storage systems (ESSs), lithium-ion secondary batteries having lower energy storage density by weight (~250 Wh/kg) have the limited use in these product applications. In contrast, lithium-sulfur secondary batteries theoretically have higher energy storage density by weight (~2,600 Wh/kg), and they are attracting attention as next-generation secondary battery technology.

Lithium-sulfur secondary batteries are a battery system using sulfur-based materials having sulfur-sulfur bonds as a positive electrode active material and lithium metal as a negative electrode active material. Sulfur, the main component of the positive electrode active material of lithium-sulfur secondary batteries, is abundant in nature and can be found around the world, is non-toxic and has low atomic weight.

During discharging, lithium-sulfur secondary batteries undergo oxidation of the negative electrode active material, lithium, by releasing electrons into ions, and reduction of the positive electrode active material, the sulfur-based material, by accepting electrons. In this instance, the oxidation reaction of lithium is a process in which lithium metal releases electrons into a lithium cation. Additionally, the reduction reaction of sulfur is a process in which the sulfur-sulfur bond accepts two electrons to form a sulfur anion. The lithium cation produced by the oxidation reaction of lithium migrates to the positive electrode via an electrolyte, and bonds with the sulfur anion produced by the reduction reaction of sulfur compound to form a salt. Specifically, sulfur before the discharge has a cyclic S₈ structure, and it is converted to lithium polysulfide (Li₂Sx, x = 8, 6, 4, 2) by the reduction reaction and when the lithium polysulfide is completely reduced, finally, lithium sulfide (Li₂S) is produced.

To achieve optimum electrochemical performance of a lithium-sulfur battery while in use, it is necessary to apply an optimal level of pressure to an electrode assembly during operation. When the lithium-sulfur battery includes a pouch type housing, the external pressure applied to the housing may be transmitted to the electrode assembly. However, when the lithium-sulfur battery is designed in a cylindrical shape and a cylindrical metal can is used as the battery housing, it is impossible to apply the pressure to the electrode assembly during operation of the battery, and the battery fails to normally operate.

### SUMMARY

### Technical Problem

The present disclosure is designed under the above-described background, and therefore the present disclosure is directed to providing a system for applying the pressure to a cylindrical lithium-sulfur battery during operation.

Specifically, the present disclosure is directed to providing a lithium-sulfur battery having a structure in which the pressure may be applied to a jelly-roll electrode assembly received in a cylindrical case during operation of the lithium-sulfur battery and a method for manufacturing the same.

Accordingly, the present disclosure is directed to providing a lithium-sulfur battery, especially a cylindrical lithium-sulfur battery with improved battery performance and a method for manufacturing the same.

The technical problems of present disclosure are not limited to the aforementioned problems, and these and other problems will be clearly understood by those skilled in the art from the following description.

### Technical Solution

According to an aspect of the present disclosure, there is provided a lithium-sulfur battery of the following embodiments.

The lithium-sulfur battery according to a first embodiment includes a jelly-roll type electrode assembly having a structure in which a negative electrode, a positive electrode and a separator are wound together, a polymer film layer that covers all or at least part of an outer surface of the electrode assembly, a case accommodating the electrode assembly coated with the polymer film layer, and an electrolyte, wherein the positive electrode includes a sulfur-based compound as an active material.

According to a second embodiment, in the first embodiment, the polymer film layer may include at least one type of heat shrink polymer.

According to a third embodiment, in the first or second embodiment, the polymer film layer may include at least one type of heat shrink polymer having a shrinkage starting temperature of from 40°C to 80°C.

According to a fourth embodiment, in any one of the first to third embodiments, the polymer film layer may include a first polymer film that comes into direct contact with the outer surface of the electrode assembly, and a second polymer film that covers all or at least part of an outer surface of the first polymer film.

According to a fifth embodiment, in any one of the first to fourth embodiments, a shrinkage starting temperature of the first polymer film may be from 50°C to 200°C, and a shrinkage starting temperature of the second polymer film may be from 40°C to 80°C. Alternatively, the shrinkage starting temperature of the first polymer film may be from 40°C to 80°C, and the shrinkage starting temperature of the second polymer film may be from 50°C to 200°C.

According to a sixth embodiment, in any one of the first to fifth embodiments, the electrode assembly may be subjected to pressure in an inward direction by the polymer film layer, and the pressure applied to the electrode assembly when the lithium-sulfur battery is in a charged state may be equal to or higher than the pressure applied to the electrode assembly when the lithium-sulfur battery is in a discharged state.

According to a seventh embodiment, in any one of the first to sixth embodiments, the case may be cylindrical in shape.

According to an eighth embodiment, in any one of the first to seventh embodiments, the polymer film layer may further include heat-absorbing inorganic particles.

According to another aspect of the present disclosure, there is provided a method for manufacturing a lithium-sulfur battery of the following embodiments.

The method for manufacturing the lithium-sulfur battery according to a ninth embodiment includes (S1) obtaining a jelly-roll type electrode assembly including a negative electrode, a positive electrode and a separator wound together; (S2) forming a polymer film layer that covers all or at least part of an outer surface of the electrode assembly; and (S3) placing the electrode assembly coated with the polymer film layer in a case together with an electrolyte and performing an activation (formation) process, wherein the activation process includes (S4) causing the polymer film layer to heat shrink in a discharged state of the battery, and wherein the positive electrode includes a sulfur-based compound as an active material.

According to a tenth embodiment, in the ninth embodiment, the discharged state may be a state of less than SOC 1%.

According to an eleventh embodiment, in the ninth or tenth embodiment, the activation process may include discharging at least one time, and after the initial discharge, before charging one time, may include causing the polymer film layer to heat shrink.

According to a twelfth embodiment, in any one of the ninth to eleventh embodiments, the polymer film layer may include a first polymer film that comes into direct contact with the outer surface of the electrode assembly, and a second polymer film that covers all or at least part of an outer surface of the first polymer film, and the (S4) may include causing the first polymer film and the second polymer film to heat shrink in different temperature ranges.

According to a thirteenth embodiment, in any one of the ninth to twelfth embodiments, the (S4) may be performed in a temperature range that is equal or lower than a decomposition temperature of the electrolyte.

According to a fourteenth embodiment, in any one of the ninth to thirteenth embodiments, the case may be cylindrical in shape.

### Advantageous Effects

The lithium-sulfur battery according to an aspect of the present disclosure may have an effect that the electrode assembly is subjected to the pressure by the heat shrinkage of the polymer film layer that covers the electrode assembly during operation of the battery.

In particular, the electrode assembly subjected to the pressure by the polymer film that got shrunk in the discharged state may be subjected to higher pressure when the lithium-sulfur battery is charged.

Accordingly, the lithium-sulfur battery according to an aspect of the present disclosure may achieve high performance.

In addition, as the electrode assembly is covered with the polymer film having high temperature shrinkage performance, it may be possible to prevent and inhibit the contact of the electrode assembly with air, thereby improving fire safety of the lithium-sulfur battery.

The method for manufacturing the lithium-sulfur battery according to another aspect of the present disclosure may provide the lithium-sulfur battery having a structure in which the battery may be subjected to pressure during operation.

The present disclosure may have many other effects, and these effects will be described in each embodiment, and with regard to effects that can be easily inferred by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and the present disclosure should not be interpreted as being limited to the drawings.

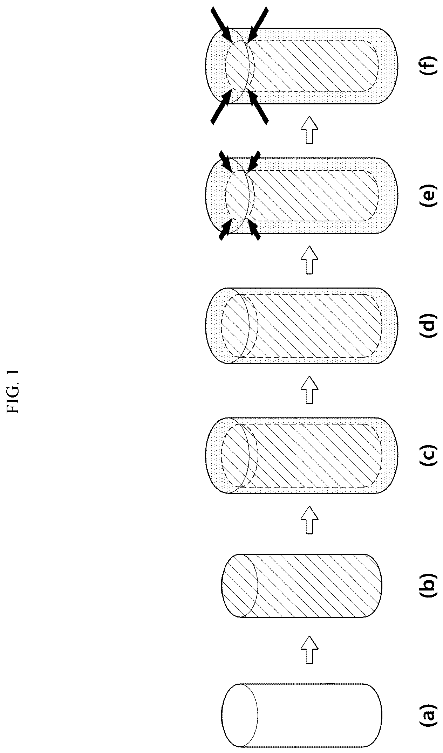

FIG. 1 is a diagram showing the steps of a method for manufacturing an electrode assembly according to an embodiment of the present disclosure. First, make a jelly-roll type electrode assembly for the manufacture of a lithium-sulfur battery, coat the surface with a polymer film having a heat shrink property to form a polymer film layer, and place in a case together with an electrolyte. Subsequently, discharge the battery through an activation process, and supply heat to the discharged battery through an external heat source to cause the polymer film to shrink. Subsequently, charge the battery. The lithium-sulfur battery is manufactured with a structure in which the electrode assembly is subjected to higher pressure than the pressure in the discharged state when the battery is charged.

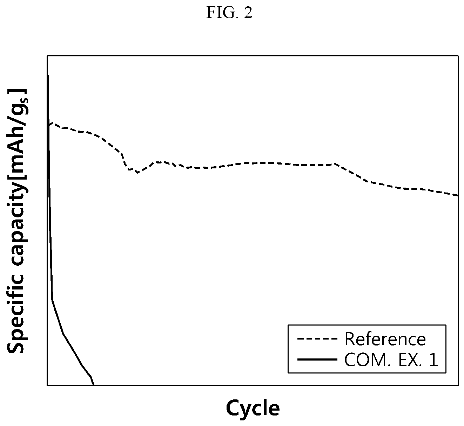

FIG. 2 is a graph showing the degradation of a lithium-sulfur battery including a conjugated heterocyclic compound as a nonaqueous solvent in an electrolyte when the battery is exposed to 80°C. It was confirmed that reference having undergone a charging and discharging process at room temperature gradually degraded over the repeated charge and discharge cycles, while a battery of Comparative Example 1 exposed to the heat of 80°C rapidly degraded over the repeated charge and discharge cycles.

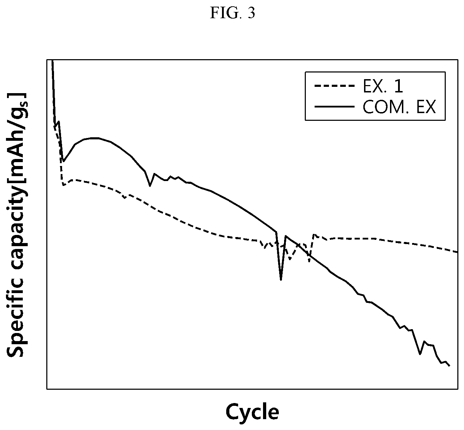

FIG. 3 is graph showing the evaluation results of charge and discharge characteristics in the presence or absence of applied pressure during charging and discharging of a lithium-sulfur battery.

### DETAILED DESCRIPTION

Hereinafter, exemplary embodiments of the present disclosure will be described in detail with reference to the accompanying drawings. Prior to the description, the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and illustrations shown in the drawings are provided to describe the exemplary embodiments of the present disclosure, but not intended to fully describe the technical aspect of the present disclosure, so it should be understood that a variety of other equivalents and variations could have been made thereto at the time the application was filed.

To help the understanding of the present disclosure, the accompanying drawings are not depicted at actual scale and some elements may be illustrated in exaggerated dimensions. Additionally, in different embodiments, the same element may have the same reference numeral.

The terminology as used herein is used to describe the exemplary embodiments, and is not intended to limit the present disclosure. Unless otherwise stated, singular forms include plural forms.

The terms indicating directions such as up and down, left and right, front and rear, in and out, etc. are used for convenience of description and it is obvious to those skilled in the art that the terms may change depending on the position of the stated object or an observer.

The term "comprise" or "include" when used in the specification, specifies the presence of stated elements, but does not preclude the presence or addition of one or more other elements, unless the context clearly indicates otherwise.

The present disclosure relates to a lithium-sulfur battery and a method for manufacturing the same.

In the present disclosure, the lithium-sulfur battery refers collectively to batteries using a sulfur-based compound as a positive electrode active material and a lithium-based material as a negative electrode active material.

In an embodiment of the present disclosure, the sulfur-based compound may include, without limitation, any sulfur-based compound that may be used as positive electrode active materials of lithium-sulfur batteries. For example, the sulfur-based compound may include inorganic sulfur (S₈), Li₂Sn (n≥1), disulfide compounds, organic sulfur compounds, carbon-sulfur polymers ((C₂Sₓ)ₙ, x=2.5 to 50 (integer), n≥2) or a mixture thereof.

In an embodiment of the present disclosure, the positive electrode may include inorganic sulfur (S₈) as the positive electrode active material.

The lithium-sulfur battery according to an embodiment of the present disclosure has a structure in which a jelly-roll type electrode assembly is received in a case together with an electrolyte.

The jelly-roll type electrode assembly refers collectively to electrode assemblies having a structure in which a negative electrode, a positive electrode and a separator are wound together.

Specifically, the jelly-roll type electrode assembly includes a long sheet-shaped positive electrode and a long sheet-shaped negative electrode, each electrode including a current collector and an electrode active material coated on the surface of the current collector, with a separator interposed between the positive electrode and the negative electrode, and an additional separator stacked on one surface of the positive electrode and/or the negative electrode, then wound together into a jelly-roll shape.

In an embodiment of the present disclosure, the jelly-roll type electrode assembly may have, for example, a stack of separator/negative electrode/separator/positive electrode or a stack of negative electrode/separator/positive electrode/separator wound around a winding axis in a direction, but is not limited thereto.

The jelly-roll type electrode assembly has a central void that is open at top and bottom in the length direction of the electrode assembly at the winding center. The central void is a hole after removing the mandrel used when winding the sheet-shaped electrode assembly. In an embodiment of the present disclosure, a cylindrical metal center pin may be inserted into the central void to support the jelly-roll structure.

Additionally, the top opening of the battery case may be sealed by a cap assembly.

According to an aspect of the present disclosure, the electrode assembly has a structure in which all or at least part of the outer surface is coated with a polymer film layer.

In an embodiment of the present disclosure, the polymer film layer may include at least one type of heat shrink polymer.

The heat shrink polymer is a polymer having a shrinkable or expandable property that allows the polymer to shrink or expand as the temperature changes, and refers collectively to polymers having a shrinkable property that allows the polymers to shrink when the temperature rises and reaches a shrinkage starting temperature.

Specifically, the heat shrink polymer has a shrinkable property that allows the polymer to shrink by an external heat source. When making the polymer film, an operation of drawing the film is performed with the application of heat, the film is stretched and cooled, followed by heating, then the stretched film returns to the original state when re-heated. That is, residual stresses are generated by stretching when making the polymer film, and when a predetermined amount or more of heat is supplied in the presence of the residual stresses, shrinkage relieves the residual stresses.

The polymer film layer includes the polymer film having the above-described property. As described below, when the volume of the electrode assembly is small during discharging in an formation process of the lithium-sulfur battery, the polymer film layer shrinks by the heat applied by the external heat source and comes into close contact with the electrode assembly surface and a predetermined pressure is applied to the inside of the electrode assembly by the shrinking force of the shrinkable polymer film. During charging, the volume of the battery increases, and the shrunken polymer film is kept in the shrunken state, so when the volume of the battery increases (i.e., when the battery is charged), the pressure applied to the inside of the electrode assembly by the polymer film layer may increase.

In an embodiment of the present disclosure, the polymer film may be formed in a tubular shape so that the polymer film layer wraps the side of the electrode assembly.

In an embodiment of the present disclosure, the heat shrink polymer included in the polymer film layer has the heat shrink temperature between 55°C and 120°C.

As described below, in the method for manufacturing the lithium-sulfur battery, after placing the electrode assembly coated with the polymer film layer in the case together with the electrolyte, a process of causing the polymer film layer to shrink is performed. Accordingly, the heat shrink polymer may preferably have the shrinkage starting temperature at or below the decomposition temperature of the electrolyte.

For example, according to an embodiment of the present disclosure, the lithium-sulfur battery may include a conjugated heterocyclic compound as a nonaqueous solvent in the electrolyte, and in this instance, the conjugated heterocyclic compound may include a material that starts to decompose when exposed to the temperature of 80°C or more.

FIG. 2 is a graph showing the comparative evaluation results of charge and discharge characteristics between the lithium-sulfur battery (Comparative Example 1) including the conjugated heterocyclic compound, for example, 2-methylfuran, as the nonaqueous solvent in the electrolyte when exposed to heat of 80°C and the lithium-sulfur battery (reference) that is not exposed to heat.

Referring to FIG. 2, it was confirmed that the battery having a battery component that decomposes through the exposure to heat may rapidly degrade when exposed to high temperature.

In this case, the heat shrink polymer used in the polymer film layer may preferably have the shrinkage starting temperature, for example, at or below 80°C.

In an embodiment of the present disclosure, the heat shrink polymer used in the polymer film layer may have, for example, the shrinkage starting temperature of from 40°C to 80°C. Specifically, the polymer film layer may include the heat shrink polymer having the shrinkage starting temperature of from 50°C to 70°C. For example, the polymer film layer may include a heat shrink polymer having the shrinkage starting temperature of from 60°C to 65°C.

In the present disclosure, the 'shrinkage starting temperature of the heat shrink polymer' refers to an initial temperature at which shrinkage stress of the same value as the initial load occurs when the polymer film is secured at room temperature (23°C to 25°C) under a constant initial load, heat is applied at a constant temperature rise rate to cause the polymer film to shrink, the stress is measured and shrinkage stress as a function of temperature is plotted.

In this instance, in the measurement of the shrinkage starting temperature, the constant temperature rise rate may be, for example, 2.5°C/sec.

FIG. 3 shows the evaluation results of charge and discharge characteristics in Example 1 in which the positive electrode using the sulfur-based compound containing sulfur (S)-sulfur (S) bond as the positive electrode active material and the negative electrode using lithium metal with the polyethylene separator interposed between them are wound around the winding axis from an end to form the jelly-roll type electrode assembly, the jelly-roll type electrode assembly is placed in the case together with the electrolyte, and charging and discharging is performed with the application of pressure to the electrode assembly using a jig and Comparative Example 2 in which charging and discharging is performed without applying the pressure.

Referring to FIG. 3, it was confirmed that Comparative Example 2 with no applied pressure during charging and discharging showed the accelerated degradation rate of the battery over the repeated charge and discharge cycles, while Example 1 subjected to pressure during charging and discharging showed the improved life characteristics.

In an embodiment of the present disclosure, preferably, the electrode assembly may be, for example, subjected to pressures that are equal to or higher than the atmospheric pressure by the polymer film layer. Specifically, the pressure of from 1.5 atm to 3 atm, or from 1.5 atm to 2.5 atm may be preferably applied.

In an embodiment of the present disclosure, the pressure applied to the electrode assembly by the polymer film layer at depth of discharge (DOD) 100% may be preferably 2 atm.

In an embodiment of the present disclosure, the heat shrink polymer may include at least one selected from polyethylene, polyolefin-based polymer, polyester-based polymer, polyvinylidene fluoride, polyethyleneterephthalate, polyester, polyvinyl chloride (PVC) and fluoroelastomer.

In an embodiment of the present disclosure, the polymer film layer may include a single polymer film. When the polymer film that covers all or at least part of the outer surface of the electrode assembly includes the heat shrink polymer, the pressure may be applied to the electrode assembly.

In another embodiment of the present disclosure, the polymer film layer may further include at least one layer of polymer film for applying the pressure to the electrode assembly and at least one another layer of polymer film for preventing the contact between the electrode assembly and air.

When the polymer film layer includes at least two polymer films, the polymer films may be referred to as a first polymer film, a second polymer film,..., an n-th polymer film in order of proximity to the outer surface of the electrode assembly.

In an embodiment of the present disclosure, the polymer film layer may include the first polymer film that comes into direct contact with the outer surface of the electrode assembly, and the second polymer film that covers all or at least part of the outer surface of the first polymer film.

When the polymer film layer includes at least two polymer films, the at least two polymer films may have the equal shrinkage starting temperature, but may have different shrinkage starting temperatures depending on their roles.

In an embodiment of the present disclosure, when the polymer film layer includes the polymer film having the shrinkage starting temperature of from 40°C to 80°C and further includes the polymer film having the shrinkage starting temperature of from 50°C to 200°C, for example, from 80°C to 180°C, from 100°C to 150°C, specifically from 130°C to 150°C, in the event that the lithium-sulfur battery is exposed to high temperature, the additional polymer film shrinks and inhibits the contact barrier between the electrode assembly and air, thereby significantly reducing the fire risk of the lithium-sulfur battery, but the present disclosure is not limited thereto.

In an embodiment of the present disclosure, when the polymer film layer includes at least two polymer films, the shrinkage starting temperature of the first polymer film may be from 50°C to 200°C, and the shrinkage starting temperature of the second polymer film may be from 40°C to 80°C.

In another embodiment of the present disclosure, when the polymer film layer includes at least two polymer films, the shrinkage starting temperature of the first polymer film may be from 40°C to 80°C, and the shrinkage starting temperature of the second polymer film may be from 50°C to 200°C.

In an embodiment of the present disclosure, when all or at least part of the outer surface of the electrode assembly is coated with the polymer film having the above-described property, the electrode assembly is subjected to pressure applied in the inward direction.

In this instance, preferably, the polymer film covers the electrode assembly such that the pressure applied to the electrode assembly when the lithium-sulfur battery is in the charged state is equal to or higher than the pressure applied to the electrode assembly when the lithium-sulfur battery is in the discharged state (see FIG. 1).

In an embodiment of the present disclosure, more preferably, the polymer film may cover the electrode assembly such that the pressure applied to the electrode assembly when the lithium-sulfur battery is in the charged state is higher than the pressure applied to the electrode assembly when the lithium-sulfur battery is in the discharged state.

In an embodiment of the present disclosure, the battery case may be cylindrical in shape. The electrode assembly coated with the polymer film layer may be used in pouch-type, prismatic batteries, but even in cylindrical batteries that are impossible to apply the pressure by the existing method, it is possible to apply the pressure to the electrode assembly.

In an embodiment of the present disclosure, the polymer film may include the heat shrink polymer alone, but may further include heat-absorbing inorganic particles.

In an embodiment of the present disclosure, the heat-absorbing inorganic particles may include, without limitation, any type of inorganic particles known as having heat absorption performance. Non-limiting examples of the heat-absorbing inorganic particles may include at least one selected from the group consisting of an antimony containing compound, aluminum hydroxide (Al(OH)₃), magnesium hydroxide (Mg(OH)₂), a guanidine based compound, a boron containing compound and zinc tartrate. The antimony containing compound may include, for example, antimony trioxide (Sb₂O₃), antimony tetroxide (Sb₂O₄), antimony pentoxide (Sb₂O₅) or a mixture thereof. The guanidine based compound may include guanidine nitrate, guanidine sulfamate, guanidine phosphate, guanyl urea phosphate or a mixture thereof. The boron containing compound may include H₃BO₃, HBO₂ or a mixture thereof. The zinc tartrate compound may include Zn₂SnO₄, ZnSnO₃, ZnSn (OH)₆ or a mixture thereof.

In an embodiment of the present disclosure, the positive electrode may have a positive electrode active material layer including the positive electrode active material on at least one surface of the positive electrode current collector. The positive electrode may have a positive electrode tab attached thereto, and the positive electrode tab may be attached, by ultrasonic welding, to an uncoated region where the positive electrode active material is not coated on the positive electrode current collector. However, the present disclosure is not limited to the above-described method for attaching the positive electrode tab, and the present disclosure may use a variety of tab attaching techniques known at the time of filing the application.

Meanwhile, the positive electrode current collector may include a metal foil having high conductivity, for example, an aluminum (Al) foil, and the positive electrode tab may be, for example, made of aluminum (Al).

In an embodiment of the present disclosure, the negative electrode may include a stand-alone lithium metal or lithium alloy. Alternatively, the negative electrode may include a freestanding lithium metal or lithium alloy and a support attached to at least one surface of the freestanding lithium metal or lithium alloy. Alternatively, the negative electrode may be formed by coating the negative electrode active material on at least one surface of the negative electrode current collector. The negative electrode may have a negative electrode tab attached thereto. In the same way as the positive electrode tab, the negative electrode tab may be attached to an uncoated region where the negative electrode active material is not coated on the negative electrode current collector, and a variety of attaching techniques including ultrasonic welding may be used. Additionally, the negative electrode current collector may include a conductive metal foil, for example, a copper (Cu) or nickel (Ni) foil, and the negative electrode tab may be, for example, made of nickel (Ni).

In an embodiment of the present disclosure, the separator may include, without limitation, any type of separator that insulates the positive electrode from the negative electrode in the jelly-roll type electrode assembly and allows for active material ion exchange between the positive electrode and the negative electrode. Specifically, the separator may include a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer or a stack structure of two or more layers thereof. Additionally, commonly used porous nonwoven fabrics, for example, nonwoven fabrics made of high melting point glass fibers, polyethyleneterephthalate fibers, etc. may be used. Additionally, to ensure heat resistance or mechanical strength, the separator may include separators having coating layers including heat resistant polymer materials, for example, ceramics or engineering plastics.

In an embodiment of the present disclosure, the sulfur-based compound as the positive electrode active material may be included in the positive electrode active material in the form of a sulfur-carbon composite of the sulfur-based compound and a carbon material. The positive electrode active material may include the sulfur-carbon composite in an amount of 80 wt% or more based on 100 wt% of the positive electrode active material, and the amount of the sulfur-based material is preferably 70 wt% or more based on 100 wt% of the sulfur-carbon composite.

In an embodiment of the present disclosure, the sulfur-carbon composite may be formed by simply mixing sulfur with the carbon material or coating or loading with a core-shell structure. The coating with the core-shell structure may be a coating of one of the sulfur and the carbon material on the other material, and for example, the carbon material surface may be covered with the sulfur or vice versa. The carbon material has a porous structure having pores inside of the body and on the surface, and in particular, sulfur may be filled in the pores of the carbon material.

The carbon material has a porous structure including a plurality of irregular pores on the surface and inside, acts as a host to provide skeleton for uniform and stable immobilization of sulfur, and compensates for low electrical conductivity of sulfur to enhance electrochemical reaction. In the sulfur-carbon composite of the present disclosure, the carbon material may include, without limitation, any carbon-based material having porous and conductive properties commonly used in the corresponding technical field. For example, the carbon material may include at least one selected from the group consisting of graphite; graphene; carbon black including Denka black, acetylene black, Ketjen black, channel black, furnace black, lamp black, thermal black, etc.; carbon nanotubes (CNT) including single-walled carbon nanotubes (SWCNT), multi-walled carbon nanotubes (MWCNT), etc.; carbon fibers including graphite nanofibers (GNF), carbon nanofibers (CNF), activated carbon fibers (ACF), etc.; graphite including natural graphite, artificial graphite, expandable graphite, etc.; carbon nanoribbons; carbon nanobelts, carbon nanorods and activated carbon.

Additionally, in an embodiment of the present disclosure, the sulfur-carbon composite may be produced by mixing the carbon material with sulfur to form a mixture and making the mixture a composite.

The mixing process for the manufacture of the sulfur-carbon composite may be performed using a stirrer commonly used in the corresponding technical field to improve the mixing between the sulfur and the carbon material. In this instance, the mixing time and speed may be selectively adjusted according to the amounts and conditions of the raw materials.

The compositing process for the manufacture of the sulfur-carbon composite is not particularly limited in the present disclosure and may use any method commonly used in the corresponding technical field. The commonly used method may include, for example, a dry method or a wet method such as spray coating. For example, thermal treatment may be performed on the mixture of the sulfur and the carbon material obtained after mixing, so that the molten sulfur may be uniformly coated over the inside of the carbon material and the surface of the carbon material. Meanwhile, in an embodiment of the present disclosure, before the thermal treatment, the mixture of the sulfur and the carbon material may be milled by ball milling. In an embodiment of the present disclosure, the thermal treatment may be performed in the temperature condition of 120 to 160°C for about 20 minutes to 24 hours, and a heater such as an oven may be used.

Since the sulfur-carbon composite manufactured through the above-described manufacturing method has large specific surface area, high sulfur loading and improved availability of sulfur, it may be possible to improve the electrochemical reactivity of sulfur and improve the accessibility and contact of the electrolyte solution, thereby improving the capacity and life characteristics of the lithium-sulfur battery.

For the components, materials or manufacturing methods of the positive electrode, the negative electrode and the separator, not only the description presented in the specification but also knowledge or facts known to those skilled in the art may be employed in the present disclosure, and its detailed description is omitted.

The electrode assembly coated with the polymer film layer may be received in the battery case, and the electrolyte may be injected to put the lithium secondary battery into operation.

In an embodiment of the present disclosure, the electrolyte is not limited to a particular type and may include any electrolyte having the composition including a nonaqueous solvent and a lithium salt or a solid electrolyte membrane used in cylindrical lithium-sulfur batteries.

In an embodiment of the present disclosure, when the electrolyte has the composition including the nonaqueous solvent and the lithium salt, the nonaqueous solvent may preferably include a linear ether compound and a conjugated heterocyclic compound.

In an embodiment of the present disclosure, the conjugated heterocyclic compound refers collectively to compounds having a structure in which p orbitals of 3 or more neighboring atoms of the compound and other p orbitals of adjacent atoms connected by a sigma bond may overlap, and an atom other than carbon is included in the structure as a ring atom.

In an embodiment of the present disclosure, when the conjugated heterocyclic compound is included as the nonaqueous solvent, the heterocyclic compound forms a polymer passivation layer (a solid electrolyte interphase (SEI) layer) on the surface of the lithium-based metal (the negative electrode) by ring opening reaction at the initial discharge stage of the battery, thereby suppressing lithium dendrite growth. Further, it may be possible to reduce electrolyte decomposition on the lithium-based metal surface and its consequential side reaction, thereby improving the life characteristics of the lithium-sulfur battery. Additionally, by the conjugated structure, it is difficult to dissolve the salt due to delocalization of lone pair electrons of the heteroatom, typically the sulfur atom, thereby reducing the amount of polysulfide leaking into the electrolyte solution.

In an embodiment of the present disclosure, the conjugated heterocyclic compound may be a 4- to 15-membered, preferably 4- to 7-membered and more preferably 5- to 6-membered heterocyclic compound. Additionally, the conjugated heterocyclic compound may be a substituted or unsubstituted heterocyclic compound with at least one selected from the group consisting of an alkyl group having 1 to 4 carbon atoms, a cyclic alkyl group having 3 to 8 carbon atoms, an aryl group having 6 to 10 carbon atoms, a halogen group, a nitro group (-NO₂), an amine group (-NH₂) and a sulfonyl group (-SO₂). Additionally, the conjugated heterocyclic compound may be a polycyclic compound of the heterocyclic compound and at least one of a cyclic alkyl group having 3 to 8 carbon atoms or an aryl group having 6 to 10 carbon atoms.

When the conjugated heterocyclic compound is substituted with an alkyl group having 1 to 4 carbon atoms, radicals are stabilized, thereby suppressing side reaction derived from the electrolyte solution. When the conjugated heterocyclic compound is substituted with a halogen group or a nitro group, a functional protective layer may be preferably formed on the lithium-based metal surface, and in this instance, the functional protective layer is stable as a compact protective layer, and may allow for uniform deposition of the lithium-based metal and suppress side reaction between polysulfide and the lithium-based metal.

In an embodiment of the present disclosure, the conjugated heterocyclic compound may include at least one of a conjugated cyclic ether compound or a thiophene-based compound.

In an embodiment of the present disclosure, the conjugated cyclic ether compound may include, for example, a furan-based compound and a pyran-based compound, and more specifically, may include furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran and 2-(2-nitrovinyl)furan or a mixture thereof, but is not limited thereto.

In an embodiment of the present disclosure, the thiophene-based compound may include, for example, thiophene, 2-methylthiophene, 2-ethylthiphene, 2-propylthiophene, 2-butylthiophene, 2,3-dimethylthiophene, 2,4-dimethylthiophene, 2,5-dimethylthiophene or a mixture thereof, but is not limited thereto.

As described above, in an embodiment of the present disclosure, the nonaqueous solvent preferably has the decomposition temperature at temperatures that are higher than the shrinkage starting temperature of the polymer film.

In an embodiment of the present disclosure, the nonaqueous solvent may include a mixture of 2-methyl furan and 1,2-dimethoxy ethane, for example, at a volume ratio of 5:5 to 2:8.

In the present disclosure, the lithium salt is a compound that provides lithium ions in the electrolyte. The lithium salt may include LiPF₆, LiClO₄, LiAsF₆, LiBF₄, LiSbF₆, LiAl0₄, LiAlCl₄, LiCF₃CO₂, LiCF₃SO₃, LiC₄F₉SO₃, LiN(C₂F₅SO₃)₂, LiCH₃SO₃, LiN(C₂F₅SO₂)₂, LiN(CF₃SO₂)₂, LiC₄BO₈, LiCl, LiBr, LiB₁₀Cl₁₀, LiI or LiB(C₂O₄)₂. In the present disclosure, in terms of high sulfur availability and high capacity and high voltage of the battery, the lithium salt preferably includes Li-TFSI. More preferably, the lithium salt may include LiN(CF₃SO₂)₂ (Li-TFSI) in an amount of 80 wt% or more, or 90 wt% or more or 100% based on the total 100 wt% of the lithium salt.

The concentration of the lithium salt is in a range between 0.1 and 2.0 M, preferably between 0.5 and 1M, and more preferably between 0.5 and 0.75M. When the concentration of the lithium salt is included in the aforementioned range, the electrolyte may have proper conductivity and viscosity and exhibit the outstanding electrolyte performance, thereby achieving effective transport of lithium ions. When the concentration of the lithium salt is below the aforementioned range, it may be difficult to ensure the suitable ionic conductivity for the operation of the battery, and when the concentration of the lithium salt is above the aforementioned range, the viscosity of the electrolyte may increase, the mobility of lithium ions may reduce or the decomposition reaction of the lithium salt itself may increase, and as a consequence, the performance of the battery may degrade.

The method for manufacturing the lithium-sulfur battery according to the present disclosure will be described in detail with reference to FIG. 1 below.

Referring to FIG. 1, the method for manufacturing the lithium-sulfur battery according to an embodiment of the present disclosure includes (a) making a jelly roll for the lithium-sulfur battery, (b) coating the jelly roll with the shrinkable polymer film layer, and (c) placing the electrode assembly in the cylindrical can, injecting the electrolyte solution and sealing the can. Subsequently, (d) activation (formation) of the battery is carried out and when the discharged state is reached, (e) the external heat source is supplied to cause the polymer film layer to shrink. Subsequently, (f) the volume of the electrode assembly is expanded when the battery is charged, but as the electrode assembly is coated with the shrunken polymer film layer, the magnitude of the pressure applied to the inside of the electrode assembly increases.

In FIG. 1, the magnitude of the pressure applied to the electrode assembly in the discharged state and the magnitude of the pressure applied to the electrode assembly in the charged state are indicated through the length of the arrow.

The method for manufacturing the lithium-sulfur battery according to another aspect of the present disclosure includes the following steps of:
(S1) obtaining the jelly-roll type electrode assembly including the negative electrode, the positive electrode and the separator wound together;
(S2) forming the polymer film layer that covers all or at least part of the outer surface of the electrode assembly; and
(S3) placing the electrode assembly coated with the polymer film layer in the case together with the electrolyte and performing the activation (formation) process.

In this instance, the activation process includes the step of (S4) causing the polymer film layer to heat shrink in the discharged state of the battery.

As described, the positive electrode includes the sulfur-based compound as the active material.

### (S1)

In an embodiment of the present disclosure, the jelly-roll type electrode assembly may be obtained by the commonly used method for obtaining the jelly-roll type electrode assembly.

For example, first, an end of the separator is wound around the mandrel a predetermined number of times, then wound together with the positive electrode and the negative electrode to make the jelly-roll type electrode assembly. This illustrates an embodiment in which the electrode assembly is wound into a jelly-roll shape, but is not limited thereto. Subsequently, the mandrel is removed from the core of the wound jelly-roll type electrode assembly. In an embodiment of the present disclosure, an appropriate type of center pin may be inserted into the location at which the mandrel is removed. In another embodiment, the mandrel may be used as the center pin.

### (S2)

Subsequently, the polymer film layer that covers all or at least part of the outer surface of the electrode assembly is formed.

That is, all or at least part of the outer surface of the electrode assembly is coated using the polymer film form the polymer film layer.

The coating may be performed on all or at least part of the outer side of the electrode assembly.

In an embodiment of the present disclosure, the polymer film may be formed in the shape of a sheet that covers the side of the electrode assembly.

In another embodiment of the present disclosure, the polymer film may be prepared in the shape of a cylindrical tube that wraps the side of the electrode assembly.

### (S3)

Subsequently, the jelly-roll type electrode assembly coated with the polymer film layer is placed in the battery case. In this instance, the electrolyte may be injected into the case before or after placing the electrode assembly in the battery case or at the same time.

In an embodiment of the present disclosure, the method may further include welding the jelly-roll structure to the bottom of the case after placing the electrode assembly in the battery case. Additionally, the opening of the battery case may be sealed by the cap assembly (not shown). In this instance, before sealing the battery, it is preferable to inject the electrolyte into the case so that the electrode assembly may be impregnated with the electrolyte.

After the electrode assembly and the electrolyte are placed in the case, the activation (formation) process of the battery is performed.

The lithium-sulfur battery is assembled in the charged state of the positive electrode immediately after it is assembled. Accordingly, the activation process is performed from the initial discharge.

### (S4)

The activation process includes causing the polymer film layer to heat shrink in the discharged state of the battery.

As described above, the polymer film layer may come into close contact with the electrode assembly by the shrinkage, and the pressure may be applied to the inside of the battery by the contact force.

The activation process is used to impart electrochemical activity to the battery and includes discharging the battery one or more times. Specifically, the activation process may include discharging one or more times and charging one or more times.

In an embodiment of the present disclosure, the activation process may include aging for uniform diffusion of the injected electrolyte in the battery, charging the battery and discharging the battery, and at least one of these steps may be further performed.

The step of causing the shrinkable polymer film to shrink is preferably performed when the volume of the jelly-roll structure is at the minimum during the activation process. In general, lithium-sulfur batteries increases in volume by charging and decreases in volume by discharging. Accordingly, the step of causing the shrinkable polymer film to shrink may be performed when the volume of the electrode assembly is at the minimum, in other words, in the discharged state.

In an embodiment of the present disclosure, the step of causing the polymer film layer to heat shrink is preferably performed when the lithium-sulfur battery is in the discharged state, for example, State of charge (SOC) is less than 1%.

In an embodiment of the present disclosure, the activation process may include discharging at least one time, and after the initial discharge, before charging one time, the activation process may include causing the polymer film layer to heat shrink.

As described above, in an embodiment of the present disclosure, the polymer film layer may include the first polymer film that comes into direct contact with the outer surface of the electrode assembly, and the second polymer film that covers all or at least part of the outer surface of the first polymer film.

In this instance, when the first polymer film and the second polymer film have different shrinkage starting temperatures, the step (S4) may be performed by causing the first polymer film and the second polymer film to heat shrink by heat in different temperature ranges.

In an embodiment of the present disclosure, the activation process may include applying the heat source to cause the polymer film to shrink, and in this instance, the step of causing the first polymer film to shrink and the step of causing the second polymer film to shrink may be performed in a sequential order or at the same time.

In another embodiment of the present disclosure, when the lithium-sulfur battery includes the polymer film layer having the shrinkage starting temperature of the first polymer film of 40°C to 80°C and the shrinkage starting temperature of the second polymer film of 50°C to 200°C, the activation process may only include the step of causing the first polymer film to shrink, and may not include the step of causing the second polymer film to shrink. Accordingly, the electrode assembly may be subjected to pressure by the first polymer film and in the event of fire, the second polymer film may prevent the contact of the electrode assembly with air, thereby improving fire safety of the lithium-sulfur battery.

As described above, in an embodiment of the present disclosure, the step (S4) is preferably performed at or below the decomposition temperature of the electrolyte.

For example, the step (S4) may include the step of applying the temperature of from 55°C to 120°C to the lithium-sulfur battery in the discharged state, for example, the temperature of from 40°C to 80°C, from 50°C to 70°C or from 60°C to 65°C, to cause the polymer film to shrink.

As described above, the shrunken polymer film is kept in the shrunken state. Accordingly, when the electrode assembly is expanded and the volume increases due to charging, the shrunken polymer film maintains its shape, keeping the electrode assembly subjected to pressure. Preferably, the pressure applied to the electrode assembly when the lithium-sulfur battery is charged may be equal to or higher than the pressure applied in the discharged state, and more preferably, the pressure applied to the electrode assembly when the lithium-sulfur battery is charged may be higher than the pressure applied in the discharged state.

According to another aspect of the present disclosure, there is provided a battery module including the lithium-sulfur battery as a unit cell.

The battery module may be used as a power source of medium- and large-sized devices that require high temperature stability, long cycle characteristics and high capacity characteristics.

Examples of the medium- and large-sized devices may include a power tool; an electric vehicle including an electric vehicle (EV), a hybrid electric vehicle (HEV), a plug-in hybrid electric vehicle (PHEV); an electric two-wheeled vehicle including an E-bike and an E-scooter; an electric golf cart; an energy storage system, or any other application where electric motors are used to power, but is not limited thereto.

## Claims

1. A lithium-sulfur battery comprising:
a jelly-roll type electrode assembly having a structure in which a negative electrode, a positive electrode and a separator are wound together;
a polymer film layer that covers all or at least part of an outer surface of the electrode assembly;
a case accommodating the electrode assembly coated with the polymer film layer; and
an electrolyte,
wherein the positive electrode includes a sulfur-based compound as an active material.

2. The lithium-sulfur battery according to claim 1, wherein the polymer film layer includes at least one type of heat shrink polymer.

3. The lithium-sulfur battery according to claim 1, wherein the polymer film layer includes at least one type of heat shrink polymer having a shrinkage starting temperature of from 40°C to 80°C.

4. The lithium-sulfur battery according to claim 1, wherein the polymer film layer includes:
a first polymer film that comes into direct contact with the outer surface of the electrode assembly, and
a second polymer film that covers all or at least part of an outer surface of the first polymer film.

5. The lithium-sulfur battery according to claim 4, wherein a shrinkage starting temperature of the first polymer film is from 50°C to 200°C, and a shrinkage starting temperature of the second polymer film is from 40°C to 80°C, or
wherein the shrinkage starting temperature of the first polymer film is from 40°C to 80°C, and the shrinkage starting temperature of the second polymer film is from 50°C to 200°C.

6. The lithium-sulfur battery according to claim 1, wherein the electrode assembly is subjected to pressure in an inward direction by the polymer film layer, and
wherein the pressure applied to the electrode assembly when the lithium-sulfur battery is in a charged state is equal to or higher than the pressure applied to the electrode assembly when the lithium-sulfur battery is in a discharged state.

7. The lithium-sulfur battery according to claim 1, wherein the case is cylindrical in shape.

8. The lithium-sulfur battery according to claim 1, wherein the polymer film layer further includes heat-absorbing inorganic particles.

9. A method for manufacturing a lithium-sulfur battery, the method comprising:
(S1) obtaining a jelly-roll type electrode assembly including a negative electrode, a positive electrode and a separator wound together;
(S2) forming a polymer film layer that covers all or at least part of an outer surface of the electrode assembly; and
(S3) placing the electrode assembly coated with the polymer film layer in a case together with an electrolyte and performing an activation (formation) process,
wherein the activation process includes (S4) causing the polymer film layer to heat shrink in a discharged state of the battery, and
wherein the positive electrode includes a sulfur-based compound as an active material.

10. The method for manufacturing the lithium-sulfur battery according to claim 9, wherein the discharged state is a state of less than SOC 1%.

11. The method for manufacturing the lithium-sulfur battery according to claim 9, wherein the activation process includes discharging at least one time, and after the initial discharge, before charging one time, includes causing the polymer film layer to heat shrink.

12. The method for manufacturing the lithium-sulfur battery according to claim 9, wherein the polymer film layer includes a first polymer film that comes into direct contact with the outer surface of the electrode assembly, and a second polymer film that covers all or at least part of an outer surface of the first polymer film, and
wherein the (S4) comprises causing the first polymer film and the second polymer film to heat shrink in different temperature ranges.

13. The method for manufacturing the lithium-sulfur battery according to claim 9, wherein the (S4) is performed in a temperature range that is equal or lower than a decomposition temperature of the electrolyte.

14. The method for manufacturing the lithium-sulfur battery according to claim 9, wherein the case is cylindrical in shape.
